# EUROPEAN PATENT SPECIFICATION

(11) **EP 1 318 648 B1**
(45) Date of publication and mention of the grant of the patent: **08.02.2006**
(21) Application number: 02258309.0
(22) Date of filing: 02.12.2002
(51) Int. Cl.: H04L 12/56, H04L 29/14

(54) **Fast path recovery method in label switching networks, and network arrangement to carry out the method**
Schnelles Pfadwiederherstellungsverfahren in Label-Vermittlungsnetzwerken und Netzwerkanordnung zur Ausführung des Verfahrens
Procédé de rétablissement rapide d'un voie dans un réseau de commutation d'étiquetttes et agencement de réseau pour exécuter ledit procédé

(30) Priority: 07.12.2001 EP 01403176
(43) Date of publication of application: 11.06.2003
(73) Proprietor: Nortel Networks Limited, St.Laurent, Quebec H4S 2A9 (CA)
(72) Inventor: Mattson, Geoffrey, Nashua, NH 03062 (US)
(74) Representative: Ameline, Jean-Paul B.C.

(56) References cited:
- EP-A- 1 079 570
- EP-A- 1 111 860
- PING PAN E ET AL.: "Fast Reroute Techniques in RSVP-TE" IETF NETWORK WORKING GROUP WORKING DRAFT, [Online] November 2001 (2001-11), pages 1-31, XP002243650 Retrieved from the Internet: <URL:http://www.ietf.org/proceedings/02mar /I-D/draft-ietf-mpls-rsvp-lsp-fastreroute- 00.txt> [retrieved on 2003-06-04]
- LE FAUCHEUR F: "IETF Multiprotocol Label Switching (MPLS) Architecture" 1998 1ST. IEEE INTERNATIONAL CONFERENCE ON ATM. ICATM'98. CONFERENCE PROCEEDINGS. COLMAR, FRANCE, JUNE 22 - 24, 1998, IEEE INTERNATIONAL CONFERENCE ON ATM, NEW YORK, NY: IEEE, US, 22 June 1998 (1998-06-22), pages 6-15, XP010290976 ISBN: 0-7803-4982-2
- AWDUCHE D O ET AL: "RSVP-TE: Extensions to RSVP for LSP Tunnels" IETF NETWORK WORKING GROUP WORKING DRAFT, 1 February 2001 (2001-02-01), pages 1-61, XP002199928
- BANERJEE A ET AL: "Generalized Multiprotocol Label Switching: An Overview of Signaling Enhancements and Recovery Techniques" IEEE COMMUNICATIONS MAGAZINE, [Online] July 2001 (2001-07), pages 144-151, XP002243651 Retrieved from the Internet: <URL:www.ieee.org> [retrieved on 2003-06-06]

## Description

### BACKGROUND OF THE INVENTION

The present invention relates to the recovery from failure in a telecommunication network.

In a telecommunication network, where voice and data - sometimes for real time applications - can be transmitted, it is necessary to have a recovery method in case of failure.

Many networks propose recovery solutions. For instance, in an IP (Internet Protocol) network, each router has a table which reveals the next hop it must perform according to the IP address of the destination included in every incoming packet. If a failure occurs on a link between two routers, several routers of the network will modify their routing table, to be able to overcome the failure by modifying the next hop to be done, which will allow the packets they deliver to be routed to their destination in spite of the link failure.

Some protocols define the way of building such routing tables. For example, OSPF (Open Shortest Path First) is a route-link protocol, based on conditions of the links. It is detailed in the Request for Comments (RFC) 1245, published by the Internet Engineering Task Force (IETF) in July 1991.

However, the recalculation of the routing tables is not instantaneous, and sometimes it can lead to different conclusions depending on the routers. So, a convergence time is necessary to get to a complete recovery. Typically, the duration may be of the order of 20 seconds, which is too long, particularly for time-sensitive applications like voice calls or other real-time transmissions.

Another solution is based on the Multi-Protocol Label Switching (MPLS) technology which can be used in an infrastructure supporting a connectionless network layer protocol such as IP. A recovery method based on MPLS circumvents the need to carry out immediately the above layer 3 processing.

"IETF Multiprotocol Label Switching (MPLS) Architecture", Le Faucheur F, presents the concepts of the Multi Protocol Label Switching (MPLS) technology under standardisation by the Internet Engineering Task Force (IETF). MPLS can be used for transport of any level 3 protocol over any level 2 technology so that one of its applications is integrated transport of IP over ATM for next generation Internet and Intranets. The document is an excerpt from a working document of the IETF MPLS working group titled "Multiprotocol Label Switching Architecture".

MPLS is described in RFC 3031 published in January 2001 by the IETF. A MPLS packet is assigned to a FEC (Forwarding Equivalence Class) at the entrance into the MPLS network, in a node called LER (Label Edge Router). The FEC is identified with a label whose size is small and fixed. The label is added to the packet by the LER before the next hop. In the following nodes, called LSR (Label Switch Routers), the label is used as an index into a table which specifies the next hop. A path followed by the packets of a FEC is called a LSP (Label Switched Path). Each LSR along the LSP may also perform label manipulations of its own, by adding (pushing), suppressing (popping) or changing (swapping) labels in the MPLS header. There is no further analysis of the network layer header of the packets in the LSRs.

A signaling protocol, such as LDP (Label Distribution Protocol, see RFC 3036 published in January 2001 by the IETF) or RSVP (Resource reSerVation Protocol, see Internet Draft "draft-letf-mpls-rsvp-lsp-tunnel-09.txt" published in August 2001 by the IETF) is used to distribute labels and establish point-to-point paths within the MPLS network.

MPLS-based recovery solutions are sometimes referred to as "local repair". An example of such local repair mechanism is described in the Internet Draft "draft-pan-rsvp-fastreroute-00.txt" published by the IETF. Let us consider a protected LSP passing through four routers A, B, C and D. A backup LSP may be configured to handle failures of the link between B and C. Such backup LSP passes through at least one additional LSR, say E, and merges with the protected LSP downstream of this link, for example in router C. When B detects a failure of the link between B and C, it switches the incoming packets of the protected LSP to the backup LSP while pushing a label of this backup LSP. Router E, or more generally the penultimate router of the backup LSP, pops this label off the MPLS stack to deliver the packets to C. The local repair mechanism provides the path recovery function quicidy. After a certain delay, the function is taken over by a conventional layer 3 mechanism of updating the routing tables.

The backup LSP may also span more than two successive links of the protected LSP. For example, in the previous case, the two LSPs may merge in router D. This may provide the path recovery function in cases where the failure detected by B occurs in router C. However, it is inoperative whenever the backup LSP bypasses a LSR which performs some action on the MPLS label stack (pushing, popping, swapping). In our example, if C changes the label stack, D will not get the packets with the correct labels along the backup LSP and therefore will not switch or process them as required.

An object of the present invention is to overcome the above limitation of known local repair methods.

### SUMMARY OF THE INVENTION

The invention proposes a method of providing backup resources for a primary LSP in a label switching network, the primary LSP having at least a portion for transmitting data packets containing a label stack from a first label switching node to a second label switching node, said portion including at least one intermediate label switching node between the first and second nodes. The method comprises the steps of:
- defining at least one backup LSP starting from the first node and merged with the primary LSP at the second node;
- determining an applied transformation of the label stack of a packet transmitted along said portion of the primary LSP from an output of the first node to an input of the second node;
- configuring the first node to switch a packet to the backup LSP upon detection of a failure in said portion of the primary LSP; and
- configuring at least one node of the backup LSP to process the label stack of any packet transmitted along the backup LSP so as to apply said transformation.

Accordingly, the nodes of the backup LSP can be configured to achieve the path recovery function even when the label stack is transformed along the protected path portion. In practice, such transformations are very frequent as soon as the backup LSP bypasses one or more nodes. The simplest transformation is a label swap, which may be a combination of several individual swap operations. It can also be more complex in cases of nested LSPs: there may be additional push and/or pop operations along the protected path portion depending on the positions of the first and second nodes relative to the nested tunnel ends.

There are different manners to automatically determine the relevant transformation of the label stack, for example by including in messages of a signaling protocol indications of individual label stack manipulations performed by the nodes of said portion of the primary LSP, or by transmitting sample packets from the first node to the second node along the primary LSP to detect the overall transformation.

The node of the backup LSP configured to apply the transformation is preferably the first node (the transformation being applied prior to pushing a label of the backup LSP) or the second node. This simplifies the operations to be performed by the nodes on the label stack.

In a particularly advantageous embodiment of the invention, the method further comprises the steps of defining at least one switchback LSP from an intermediate node of the primary LSP to the first node, and configuring said intermediate node to switch a packet to the switchback LSP upon detection of a failure in said portion of the primary LSP downstream of said intermediate node and up to the node situated next to said intermediate node. The first node can then be configured to switch to the backup LSP any packet received on the switchback LSP. The method may comprise the further steps of determining a second transformation of the label stack as the inverse of a transformation of the label stack of a packet transmitted along said portion of the primary LSP from the output of the first node to said intermediate node, and configuring at least one node of the switchback LSP to process the label stack of any packet transmitted from said intermediate node along the switchback LSP so as to apply said second transformation.

Such switchback LSP makes it possible to achieve path recovery when various links or nodes are likely to fail along the protected path portion, while consuming a relatively small amount of label resources.

Another aspect of the invention relates to a label switching network suitable for implementing the above-described method.

The preferred features of the above aspects which are indicated by the dependent claims may be combined as appropriate, and may be combined with any of the above aspects of the invention, as would be apparent to a person skilled in the art.

### BRIEF DESCRIPTION OF THE DRAWINGS

Figure 1 is a schematic view of an embodiment of the invention in a very simple case.
Figure 2 is a schematic view of an embodiment of the invention illustrating a switchback case.

### DESCRIPTION OF PREFERRED EMBODIMENTS

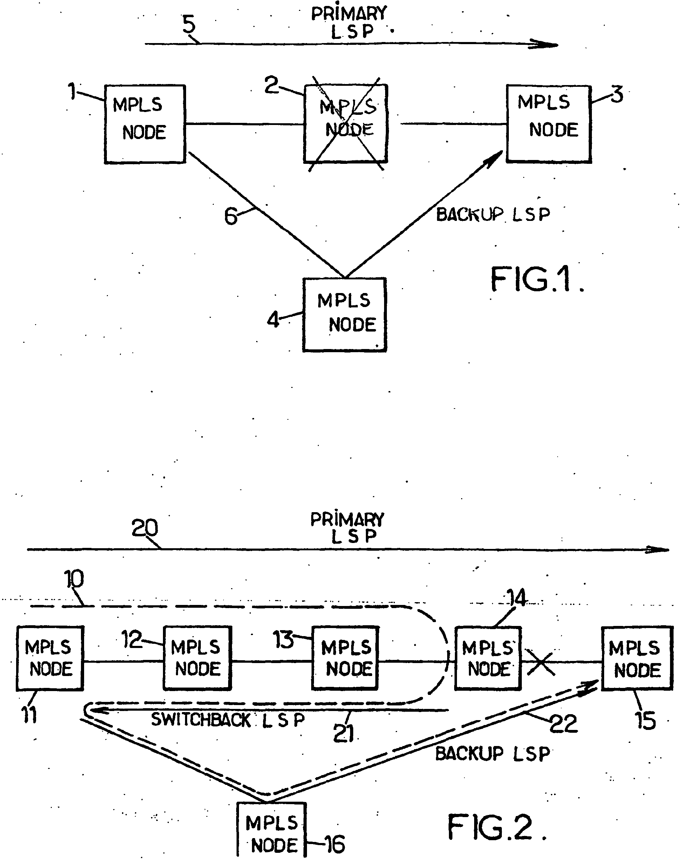

Figure 1 illustrates diagrammatically a MLPS network in which a primary LSP 5 has been defined. The primary LSP 5 has a protected portion consisting of three successive MPLS nodes 1, 2, 3. Node 2 is a LSR in this example. Node 1 is a LER if the protected portion starts at the entrance of LSP 5, and a LSR if LSP 5 has one or more nodes upstream of its protected portion. Node 3 is a LER if the protected portion ends at the exit of LSP 5, and a LSR if LSP 5 has one or more nodes downstream of its protected portion.

As a backup resource, another LSP 6 has been defined in the MLPS network from node 1 to node 3 via an additional MPLS node (LSR) 4.

LSPs 5, 6 are established in a conventional manner by means of a signaling protocol such as LDP or RSVP.

Node 1 is configured to provide a local repair function when certain failures occur on the protected portion of the primary LSP 5.

Accordingly, when it detects such a failure, node 1 switches the traffic of the primary LSP to the backup LSP 6. To do so, it pushes a label allocated to the backup LSP on top of the label stack of each re-routed packet. This packet is tunneled into the backup LSP up to its egress node 3 where the backup LSP merges with the primary LSP 5. The penultimate node (4 in our example) of LSP 6 pops the label of the backup LSP off the label stack to deliver the packet to node 3 as it were when it entered the tunnel at node 1. The popping can also be performed at the input of the tunnel egress node 3.

However, the state of the label stack at the input of node 3 on the backup LSP 6 is not necessarily the same as it would have been had the packet been transmitted along the primary LSP 5. The reason is that label stack manipulations may occur in nodes of the protected portion of the primary LSP 5 (node 2 in the example of figure 1).

Such manipulations result from the establishment of the LSPs in the MLPS network, e.g. by means of LDP. For instance, the set of labels available on a given hop in view of the labels which have already been allocated to other LSPs on the same link may impose a label swap operation in an intermediate node of a LSP which is being established.

Other label stack manipulations may result from the MPLS architecture, particularly in the case of nested LSPs. For instance, assume that another nested LSP starts at node 2 toward node 3 along LSP 5: in such a case, node 2 pushes one or more LSP labels on top of the label stack of an incoming packet to be forwarded to node 3. Likewise, if a nested LSP ends at node 3 from nodes 1 and 2, node 2 may have to pop one or more LSP labels off the label stack of an incoming packet. More complex MPLS architectures can result in quite substantial transformations of the label stack along the protected portion of the primary LSP.

In order to cope with the inconsistencies of the label stacks when a packet of the primary LSP is received at node 3 from node 2 (protected portion of LSP 5) and from node 4 (backup LSP), a node of the backup LSP 6 is further configured to apply to the packet a label stack transformation determined to be the same as that resulting from the aggregated label operation performed along the protected portion of the primary LSP 5 from the output of node 1 to the input of node 3.

The node of the backup LSP 6 configured to apply this transformation is preferably at one end of the tunnel, i.e. the ingress node 1 or the egress node 3.

Two methods can be used for this node to determine the transformation to be applied. A first method uses an enhancement of the signaling protocol used to establish the LSPs, for example LDP. In this first method, when the labels are distributed along the path, each intermediate node inserts into the enhanced LDP message an indication depending of any label manipulation which it performs. It may be an indication of its individual label manipulation, or an indication of an accumulated transformation determined by combining the manipulation indicated in the message received from the upstream node with its individual label manipulation. This signaling message is initialized with an indication of no manipulation (identity transformation) at the entrance of the portion of the primary LSP which is to be protected. Therefore, the node 3 located at the exit of the portion to be protected receives a signaling message from which it readily determines the required transformation.

It is then quite simple to configure the egress node 3 of the backup LSP to apply the transformation to any packets tunneled therethrough. The egress node 3 may also signal back the transformation to the ingress node 1 if the latter is configured to apply the transformation to the tunneled packets.

In the second method, the protected portion of the primary LSP 5 is probed by transmitting a sample packet from the ingress node 1 to the egress node 3. The latter analyzes the sample packet as received along the primary LSP 5 to learn the relevant label stack transformation.

In the example shown in figure 1, the above-mentioned method provides quick path recovery if a failure occurs on the link between nodes 1 and 2 or in node 2. This is normally detected by the node located immediately upstream of the failure, i.e. node 1 which is at the entrance of the backup tunnel. If the local repair is to be provided for the link between nodes 2 and 3, it is possible to use an additional switchback path as described in more detail with reference to figure 2.

Figure 2 shows a different LSP arrangement in the MPLS network, with a primary LSP 20 whose protected portion has an ingress node 11, an egress node 15 and three successive intermediate nodes 12, 13, 14. A backup LSP 22 is also defined from node 11 to node 15 via an intermediate LSR node 16. The backup LSP 22 is established as described previously, in particular in such a way that the label stack transformation applied along the protected portion of the primary LSP is also applied to packets tunneled through the backup LSP 22. Therefore, it provides local repair in case of failure of node 12 or of the link between nodes 11 and 12.

Furthermore, another backup LSP 21, called switchback LSP, is defined between nodes 14 and 11. In the advantageous configuration shown in figure 2, the switchback LSP 21 goes through the same nodes 13,12 as the primary LSP 20, in the reverse direction, from node 14 to node 11.

The switchback LSP 21 can be used for local repair when a failure is detected on the protected portion of the primary LSP 20 downstream of the intermediate node 14 located at its entrance, and not farther than the node situated next to this intermediate node 14 along LSP 20 (that is when the failure occurs on the link between nodes 14 and 15 in the example shown).

As an additional configuration feature of the ingress node 11 of the backup LSP 22, the label switching table of this node 11 has an entry for switching any packet received from node 12 on the switchback LSP to the backup LSP 22 to be tunneled to node 15 as described previously.

At the entrance of the switchback LSP 21, node 14 is configured to switch any packet of the primary LSP 20 intended for the next node 15 back on the switchback LSP 21 if a failure is detected downstream. When doing so, node 14 pushes a label of the switchback LSP 21 on top of the label stack of the packet. This label is then popped at the penultimate or last node of the switchback LSP 21, i.e. at node 12 or 11.

To achieve the required label stack consistency when the packet finally arrives at node 15 (along path 10 depicted as a dashed line in figure 2), it is also necessary to apply to the label stack of this packet a transformation which is the inverse of the transformation undergone along the direct primary path 20 from the output of node 11 to the input of node 14. One of the nodes of the switchback LSP 21 is configured to apply this inverse transformation to the tunneled packets when a failure is detected downstream of node 14. Therefore, the overall transformation applied along the concatenation of LSP 21 and 22 corresponds to the transformation applied along the primary path 20 between the inputs of nodes 14 and 15. in other words, the concatenation of the LSP tunnels 21 and 22 acts as a backup LSP for protecting the portion of the primary LSP extending between nodes 14 and 15.

The node of the switchback LSP 21 which is configured to apply the inverse transformation is preferably the ingress node 14, the inverse transformation being applied prior to pushing the switchback LSP label. Node 14 learns the direct transformation between nodes 11 and 14 according to one of the methods described previously for the backup LSP, and inverts it to deduce the suitable inverse transformation.

Another remarkable feature of the switchback LSP 21 is that it can also be used by other intermediate nodes of the primary LSP 20 to increase the number of locally repairable failure scenarios. This advantage is achieved with only a moderate increase of the complexity of the label switching tables in the MPLS nodes.

For example, node 13 in figure 2 may be configured to directly insert packets into the switchback tunnel when it detects a failure downstream of the switchback LSP 21 and up to the next node 14. Of course, node 13 then has to determine the suitable inverse transformation that it should apply to such packets. This is done exactly in the same manner as for the ingress node 14 of the switchback LSP 21. The switchback LSP label which is pushed by the intermediate node 13 when it so inserts a packet into the switchback tunnel may be the same as that pushed by node 14, or it may take into account any swap operation performed along the switchback LSP 21 between the outputs of nodes 14 and 13 (their inputs along the primary path 20).

The determination of which LSPs should be protected, as well as the architecture of the backup and/or switchback LSPs, is a matter of network design and operations-and-maintenance policy for the MPLS network operator. Once this is decided, the LSPs can be established and configured as described previously.

The text of the abstract repeated below is hereby deemed incorporated in the description:

A primary label switched path (LSP) defined in a label switching network has a protected portion for transmitting data packets containing a label stack from a first label switching node to a second label switching node, the protected portion including at least one intermediate label switching node between the first and second nodes. To provide path recovery resources in case of link or node failure, it is proposed a method in which a backup LSP is defined from the first node to the second node. A transformation of the label stack of a packet transmitted along the protected portion of the primary LSP from an output of the first node to an input of the second node is determined. The first node is configured to switch a packet to the backup LSP upon detection of a failure in the protected portion of the primary LSP. In addition, a node of the backup LSP is configured to process the label stack of any packet transmitted along the backup LSP so as to apply the determined transformation.

## Claims

1. A method of providing backup resources for a primary label switched path (LSP) (5. 20) in a label switching network, the primary LSP (5, 20) having at least a portion for transmitting data packets containing a label stack from a first label switching node (1, 11) to a second label switching node (3, 15), said portion including at least one intermediate label switching node (2, 12-14) between the first and second nodes (1, 3. 11, 15), the method comprising the steps of:
- defining at least one backup LSP (6, 22) starting from the first node (1, 11) and merged with the primary LSP (5. 20) at the second node (3, 15);
- configuring the first node (1, 11) to switch a packet to the backup LSP (6, 22) upon detection of a failure in said portion of the primary LSP (5, 20);
**characterised in that** the method further comprises the steps of:
- determining an applied transformation of the label stack of a packet transmitted along said portion of the primary LSP (5, 20) from an output of the first node (1, 11) to an input of the second node (3, 15); and
- configuring at least one node of the backup LSP (6, 22) to process the label stack of any packet transmitted along the backup LSP (6, 22) so as to apply said transformation.

2. A method as claimed in daim 1, wherein the node of the backup LSP (6) configured to apply the transformation is the first node (1), said transformation being applied prior to pushing a label of the backup LSP (6).

3. A method as daimed in claim 1, wherein the node of the backup LSP (6) configured to apply the transformation is the second node (3).

4. A method as daimed in claim 1, wherein the step of determining the transformation of the label stack comprises transmitting messages of a signaling protocol between the nodes (2) of said portion of the primary LSP (5), induding indications of label stack manipulations performed by said nodes on packets transmitted along the primary LSP (5), said indications being processed at one of the first and second nodes (1, 3) for deriving said transformation.

5. A method as claimed in claim 1, wherein the step of determining the transformation of the label stack comprises transmitting at least one sample packet from the first node (1) to the second node (3) along said portion of the primary LSP (5).

6. A method as claimed in claim 1, wherein the first node (1) is configured to switch a packet intended for the primary LSP (5) to the backup LSP (6) upon detection of a failure in said portion of the primary LSP (5) up to the intermediate node situated next to the first node (1).

7. A method as claimed in claim 1, further comprising the steps of:
- defining at least one switchback LSP (21) from an intermediate node (14) of the primary LSP (20) to the first node (11); and
- configuring said intermediate node (14) to switch a packet to the switchback LSP (21) upon detection of a failure in said portion of the primary LSP (20) downstream of said intermediate node (14) and up to the node situated next to said intermediate node (14).

8. A method as claimed in claim 7, further comprising the step of configuring the first node (11) to switch to the backup LSP (22) any packet received on the switchback LSP (21).

9. A method as daimed in claim 8, further comprising the steps of:
- determining a second transformation of the label stack as the inverse of a transformation of the label stack of a packet transmitted along said portion of the primary LSP (20) from the output of the first node (11) to said intermediate node (14); and
- configuring at least one node of the switchback LSP (21) to process the label stack of any packet transmitted from said intermediate node (14) along the switchback LSP (21) so as to apply said second transformation.

10. A method as claimed in claim 9, wherein the node of the switchback LSP (21) configured to apply the second transformation is said intermediate node (14), the second transformation being applied prior to pushing a label of the switchback LSP (21).

11. A method as claimed in claim 10, wherein the primary LSP (20) has at least one additional intermediate node (13) between the first node (11) and said intermediate node (14), wherein the switchback LSP (21) is defined to comprise the nodes of the primary LSP (20), in a reverse direction, from said intermediate node (14) to the first node (11).

12. A method as claimed In claim 11, further comprising the step of configuring said additional intermediate node (13) to switch a packet to the switchback LSP (21) upon detection of a failure in said portion of the primary LSP (20) downstream of said additional intermediate node (13) and up to the node situated next to said additional intermediate node (13).

13. A method as daimed in claim 12, further comprising the steps of:
- determining a third transformation of the label stack as the inverse of a transformation of the label stack of a packet transmitted along said portion of the primary LSP (20) from the output of the first node (11) to said additional intermediate node (13); and
- configuring said additional intermediate node (13) to process the label stack of any packet that it switches to the switchback LSP (21) so as to apply said inverse transformation prior to pushing a label of the switchback LSP (21).

14. A label switching network including a primary label switched path (5, 20) (LSP) having at least a portion for transmitting data packets containing a label stack from a first label switching node (1, 11) to a second label switching node (3, 15), said portion including at least one intermediate label switching node between the first and second nodes (1,3, 11, 15), the network comprising:
- means for defining at least one backup LSP (6, 22) starting from the first node and merged with the primary LSP (5, 20) at the second node (3, 15);
- means for configuring the first node (1, 11) to cause said first node (1, 11) to switch a packet to the backup LSP (6, 22) upon detection of a failure in said portion of the primary LSP (5, 20);
**characterised in that** the network further comprises:
- means for determining an applied transformation of the label stack of a packet transmitted along said portion of the primary LSP (5, 20) from an output of the first node (1, 11) to an input of the second node (3, 15); and
- means for configuring a node of the backup LSP (6, 22) to cause said node (1,3, 11, 15) to process the label stack of any packet transmitted along the backup LSP (6, 22) so as to apply said transformation.

15. A label switching network as claimed in claim 14, wherein the node of the backup LSP (6) configured to apply the transformation is the first node (1), said transformation being applied prior to pushing a label of the backup LSP (6).

16. A label switching network as daimed in claim 14, wherein the node of the backup LSP (6) configured to apply the transformation is the second node (3).

17. A label switching network as claimed in claim 14, wherein the means for determining the transformation of the label stack comprise means for transmitting messages of a signaling protocol between the nodes (2) of said portion of the primary LSP (5), including indications of label stack manipulations performed by said nodes (2) on packets transmitted along the primary LSP (5), and processing means for processing said indications at one of the first and second nodes (1,3) for deriving said transformation.

18. A label switching network as claimed in daim 14, wherein the means for determining the transformation of the label stack comprise means for transmitting at least one sample packet from the first node (1) to the second node (3) along said portion of the primary LSP (5).

19. A label switching network as claimed in claim 14, wherein the first node (1) is configured to switch a packet intended for the primary LSP (5) to the backup LSP (6) upon detection of a failure in said portion of the primary LSP (5) up to the intermediate node situated next to the first node (1).

20. A label switching network as claimed in claim 14, further comprising:
- means for defining at least one switchback LSP (21) from an intermediate node (14) of the primary LSP (20) to the first node (11); and
- means for configuring said intermediate node (14) to cause said intermediate node (14) to switch a packet to the switchback LSP (21) upon detection of a failure in said portion of the primary LSP (20) downstream of said intermediate node (14) and up to the node situated next to said intermediate node (14).

21. A label switching network as claimed in claim 20, further comprising means for configuring the first node (11) to cause said first node to switch to the backup LSP (22) any packet received on the switchback LSP (21).

22. A label switching network as claimed in claim 20, further comprising:
- means for determining a second transformation of the label stack as the inverse of a transformation of the label stack of a packet transmitted along said portion of the primary LSP (20) from the output of the first node (11) to said intermediate node (14); and
- means for configuring a node of the switchback LSP (21) to cause said node to process the label stack of any packet transmitted from said intermediate node (14) along the switchback LSP (21) so as to apply said second transformation.

23. A label switching network as claimed in claim 22, wherein the node of the switchback LSP (21) configured to apply the second transformation is said intermediate node (14), the second transformation being applied prior to pushing a label of the switchback LSP (21).

24. A label switching network as claimed in claim 23, wherein the primary LSP has at least one additional intermediate node (13) between the first node (11) and said intermediate node (14), wherein the switchback LSP (21) is defined to comprise the nodes of the primary LSP (20), in a reverse direction, from said intermediate node (14) to the first node (11).

25. A label switching network as claimed in claim 24, further comprising means for configuring said additional intermediate node (13) to cause said additional intermediate node (13) to switch a packet to the switchback LSP (21) upon detection of a failure in said portion of the primary LSP (20) downstream of said additional intermediate node (13) and up to the node situated next to said additional intermediate node (13).

26. A label switching network as claimed in claim 25, further comprising:
- means for determining a third transformation of the label stack as the inverse of a transformation of the label stack of a packet transmitted along said portion of the primary LSP (20) from the output of the first node (11) to said additional intermediate node (13); and
- means for configuring said additional intermediate node (13) to cause said additional intermediate node (13) to process the label stack of any packet that it switches to the switchback LSP (21) so as to apply said inverse transformation prior to pushing a label of the switchback LSP (21).

## Patentansprüche

1. Verfahren zum Bereitstellen von Reserve-Ressourcen für einen primären Label-Vermittlungspfad (LSP) (5, 20) in einem Label-Vermittlungsnetzwerk, wobei der primäre LSP (5. 20) wenigstens einen Teil zur Übermittlung von Datenpaketen, die einen Labelstapel enthalten, von einem ersten Label-Vermittlungsknoten (1, 11) an einen zweiten Label-Vermittlungsknoten (3, 15) aufweist, wobei dieser Teil wenigstens einen intermediären Label-Vermittlungsknoten (2, 12-14) zwischen den ersten und zweiten Knoten (1, 3; 11, 15) enthält, mit den Schritten:
- Definieren wenigstens eines Reserve-LSP (6. 22), der von dem ersten Knoten (1, 11) ausgeht und an dem zweiten Knoten (3, 15) mit dem primären LSP (5, 20) verschmilzt,
- Konfigurieren des ersten Knotens (1, 11) dazu, ein Paket bei Detektion eines Fehlers in dem genannten Teil des primären LSP (5, 20) auf den Reserve-LSP (6, 22) zu schalten,
**gekennzeichnet durch** die folgenden weiteren Schritte:
- Bestimmen einer angewandten Transformation des Labelstapels eines Pakets, das auf dem genannten Teil des primären LSP (5,20) von einem Ausgang des ersten Knotens (1, 11) zu einem Eingang des zweiten Knotens (3, 15) übermittelt wird, und
- Konfigurieren wenigstens eines Knotens des Reserve-LSP (6, 22) dazu, den Labelstapel eines auf dem Reserve-LSP (6, 22) übermittelten Pakets zu verarbeiten, um die genannte Transformation anzuwenden.

2. Verfahren nach Anspruch 1, bei dem der Knoten des Reserve-LSP (6), der zur Anwendung der Transformation konfiguriert wird, der erste Knoten (1) ist, wobei diese Transformation vor dem Einschieben eines Labels des Reserve-LSP (6) angewandt wird.

3. Verfahren nach Anspruch 1, bei dem der Knoten des Reserve-LSP (6), der zur Anwendung der Transformation konfiguriert wird, der zweite Knoten (3) ist.

4. Verfahren nach Anspruch 1, bei dem der Schritt der Bestimmung der Transformation des Labelstapels die Übermittlung von Nachrichten eines Signalprotokolls zwischen den Knoten (2) des genannten Teils des primären LSP (5), einschließlich Angaben von Labelstapel-Manipulationen, die von den genannten Knoten an auf dem primären LSP (5) übertragenen Paketen vorgenommen wurden, umfaßt, wobei diese Angaben an einem der ersten und zweiten Knoten (1, 3) verarbeitet werden, um die genannte Transformation abzuleiten.

5. Verfahren nach Anspruch 1, bei dem der Schritt der Bestimmung der Transformation des Labelstapels das Übermitteln wenigstens eines Probepakets von dem ersten Knoten (1) an den zweiten Knoten (3) auf dem genannten Teil des primären LSP (5) umfaßt.

6. Verfahren nach Anspruch 1, bei dem der erste Knoten (1) dazu konfiguriert wird, bei Detektion eines Fehlers in dem genannten Teil des primären LSP (5) bis zu dem intermediären Knoten, der dem ersten Knoten (1) am nächsten liegt, ein für den primären LSP (5) vorgesehenes Paket auf den Reserve-LSP (6) zu schalten.

7. Verfahren nach Anspruch 1, mit den weiteren Schritten:
- Definieren wenigstens eines Rückkopplungs-LSP (21) von einem intermediären Knoten (14) des primären LSP (20) zu dem ersten Knoten (11) und
- Konfigurieren des intermediären Knotens (14) dazu, bei Detektion eines Fehlers in dem genannten Teil des primären LSP (2) stromabwärts des intermediären Knotens (14) und bis zu dem Knoten, der dem intermediären Knoten (14) am nächsten liegt, ein Paket in den Rückkopplungs-LSP (21) zu vermitteln.

8. Verfahren nach Anspruch 7, mit dem weiteren Schritt des Konfigurierens des ersten Knotens (11) zur Vermittlung eines etwa vom Rückkopplungs-LSP (21) empfangenen Pakets in den Reserve-LSP (22).

9. Verfahren nach Anspruch 8, mit den weiteren Schritten:
- Bestimmen einer zweiten Transformation des Labelstapels als das Inverse einer Transformation des Labelstapels eines Pakets, das auf dem genannten Teil des primären LSP (20) vom Ausgang des ersten Knotens (11) bis zum intermediären Knoten (14) übertragen wird, und
- Konfigurieren wenigstens eines Knotens des Rückkopplungs-LSP (21) zum Verarbeiten des Labelstapels eines etwa von dem intermediären Knoten (14) auf dem Rückkopplungs-LSP (21) übermittelten Pakets, um die zweite Transformation anzuwenden.

10. Verfahren nach Anspruch 9, bei dem der Knoten des Rückkopplungs-LSP (21), der zur Anwendung der zweiten Transformation konfiguriert wird, der intermediäre Knoten (14) ist, wobei die zweite Transformation vor dem Einschieben eines Labels des Rückkopplungs-LSP (21) angewandt wird.

11. Verfahren nach Anspruch 10, bei dem der primäre LSP (20) wenigstens einen zusätzlichen intermediären Knoten (13) zwischen dem ersten Knoten (11) und dem genannten intermediären Knoten (14) aufweist, wobei der Rückkopplungs-LSP (21) so definiert ist, daß er die Knoten des primären LSP (20) in einer umgekehrten Richtung, von dem intermediären Knoten (14) zu dem ersten Knoten (11) enthält.

12. Verfahren nach Anspruch 11, mit dem weiteren Schritt des Konfigurierens des zusätzlichen intermediären Knotens (13) dazu, bei Detektion eines Fehlers in dem genannten Teil des primären LSP (20) stromabwärts des zusätzlichen intermediären Knotens (13) und bis zu dem Knoten, der dem zusätzlichen intermediären Knoten (13) am nächsten liegt, ein Paket in den Rückkopplungs-LSP (21) zu vermitteln.

13. Verfahren nach Anspruch 12, mit den weiteren Schritten:
- Bestimmen einer dritten Transformation des Labelstapels als das Inverse einer Transformation des Labelstapels eines Pakets, das auf dem genannten Teil des primären LSP (20) von Ausgang des ersten Knotens (11) zu dem zusätzlichen intermediären Knoten (13) übertragen wird, und
- Konfigurieren dieses zusätzlichen intermediären Knotens (13) zur Verarbeitung des Labelstapels eines etwaigen Pakets, das er in den Rückkopplungs-LSP (21) vermittelt, um die genannte inverse Transformation vor dem Einschieben eines Labels des Rückkopplungs-LSP (21) anzuwenden.

14. Label-Vermittlungsnetzwerk mit einem primären Label-vermittelten Pfad (LSP) (5, 20), der wenigstens einen Teil zur Übertragung von einen Labelstapel enthaltenden Datenpaketen von einem ersten Label-Vermittlungsknoten (1, 11) zu einem zweiten Label-Vermittlungsknoten (3, 15) aufweist, wobei dieser Teil wenigstens einen intermediären Label-Vermittlungsknoten zwischen den ersten und zweiten Knoten (1, 3; 11, 15) aufweist, mit:
- Mitteln zum Definieren wenigstens eines Reserve-LSP (6. 22), der von dem ersten Knoten (1, 11) ausgeht und an dem zweiten Knoten (3, 15) mit dem primären LSP (5, 20) verschmilzt,
- Mitteln zum Konfigurieren des ersten Knotens (1, 11) dazu, ein Paket bei Detektion eines Fehlers in dem genannten Teil des primären LSP (5, 20) auf den Reserve-LSP (6, 22) zu schalten,
**dadurch gekennzeichnet, daß** das Netzwerk weterhin aufweist:
- Mittel zum Bestimmen einer angewandten Transformation des Labelstapels eines Pakets, das auf dem genannten Teil des primären LSP (5,20) von einem Ausgang des ersten Knotens (1, 11) zu einem Eingang des zweiten Knotens (3, 15) übermittelt wird, und
- Mittel zum Konfigurieren wenigstens eines Knotens (1, 3; 11, 15) des Reserve-LSP (6, 22) dazu, den Labelstapel eines auf dem Reserve-LSP (6, 22) übermittelten Pakets zu verarbeiten, um die genannte Transformation anzuwenden.

15. Label-Vermittlungsnetzwerk nach Anspruch le, bei dem der Knoten des Reserve-LSP (6), der zur Anwendung der Transformation konfiguriert wird, der erste Knoten (1) ist, wobei diese Transformation vor dem Einschieben eines Labels des Reserve-LSP (6) angewandt wird.

16. Label-Vermittlungsnetzwerk nach Anspruch 14, bei dem der Knoten des Reserve-LSP (6), der zur Anwendung der Transformation konfiguriert wird, der zweite Knoten (3) ist.

17. Label-Vermittlungsnetzwerk nach Anspruch 14, bei dem die Mittel zur Bestimmung der Transformation des Labelstapels Mittel zur Übermittlung von Nachrichten eines Signalprotokolls zwischen den Knoten (2) des genannten Teils des primären LSP (5), einschließlich Angaben von Labelstapel-Manipulationen, die von den genannten Knoten an auf dem primären LSP (5) übertragenen Paketen vorgenommen wurden, und Verarbeitungsmittel zur Verarbeitung dieser Angaben an einem der ersten und zweiten Knoten (1, 3) umfaßt, um die genannte Transformation abzuleiten.

18. Label-Vermittlungsnetzwerk nach Anspruch 14, bei dem die Mittel zur Bestimmung der Transformation des Labelstapels Mittel zur Übermittlung wenigstens eines Probepakets von dem ersten Knoten (1) an den zweiten Knoten (3) auf dem genannten Teil des primären LSP (5) umfaßt.

19. Label-Vermittlungsnetzwerk nach Anspruch 14, bei dem der erste Knoten (1) dazu konfiguriert ist, bei Detektion eines Fehlers in dem genannten Teil des primären LSP (5) bis zu dem intermediären Knoten, der dem ersten Knoten (1) am nächsten liegt, ein für den primären LSP (5) vorgesehenes Paket auf den Reserve-LSP (6) zu schalten.

20. Label-Vermittlungsnetzwerk nach Anspruch 14, mit:
- Mitteln zum Definieren wenigstens eines Rückkopplungs-LSP (21) von einem intermediären Knoten (14) des primären LSP (20) zu dem ersten Knoten (11) und
- Mitteln zum Konfigurieren des intermediären Knotens (14) dazu, bei Detektion eines Fehlers in dem genannten Teil des primären LSP (2) stromabwärts des intermediären Knotens (14) und bis zu dem Knoten, der dem intermediären Knoten (14) am nächsten liegt, ein Paket in den Rückkopplungs-LSP (21) zu vermitteln.

21. Label-Vermittlungsnetzwerk nach Anspruch 20, mit Mitteln zum Konfigurieren des ersten Knotens (11) zur Vermittlung eines etwa vom Rückkopplungs-LSP (21) empfangenen Pakets in den Reserve-LSP (22).

22. Label-Vermittlungsnetzwerk nach Anspruch 20, mit:
- Mitteln zum Bestimmen einer zweiten Transformation des Labelstapels als das Inverse einer Transformation des Labelstapels eines Pakets, das auf dem genannten Teil des primären LSP (20) vom Ausgang des ersten Knotens (11) bis zum intermediären Knoten (14) übertragen wird, und
- Mitteln zum Konfigurieren wenigstens eines Knotens des Rückkopplungs-LSP (21) zum Verarbeiten des Labelstapels eines etwa von dem intermediären Knoten (14) auf dem Rückkopplungs-LSP (21) übermittelten Pakets, um die zweite Transformation anzuwenden.

23. Label-Vermittlungsnetzwerk nach Anspruch 22, bei dem der Knoten des Rückkopplungs-LSP (21), der zur Anwendung der zweiten Transformation konfiguriert ist, der intermediäre Knoten (14) ist, wobei die zweite Transformation vor dem Einschieben eines Labels des Rückkopplungs-LSP (21) angewandt wird.

24. Label-Vermittlungsnetzwerk nach Anspruch 23, bei dem der primäre LSP (20) wenigstens einen zusätzlichen intermediären Knoten (13) zwischen dem ersten Knoten (11) und dem genannten intermediären Knoten (14) aufweist, wobei der Rückkopplungs-LSP (21) so definiert ist, daß er die Knoten des primären LSP (20) in einer umgekehrten Richtung, von dem intermediären Knoten (14) zu dem ersten Knoten (11) enthält.

25. Label-Vermittlungsnetzwerk nach Anspruch 24, mit Mitteln zum Konfigurieren des zusätzlichen intermediären Knotens (13) dazu, bei Detektion eines Fehlers in dem genannten Teil des primären LSP (20) stromabwärts des zusätzlichen intermediären Knotens (13) und bis zu dem Knoten, der dem zusätzlichen intermediären Knoten (13) am nächsten liegt, ein Paket in den Rückkopplungs-LSP (21) zu vermitteln.

26. Label-Vermittlungsnetzwerk nach Anspruch 25, mit:
- Mitteln zum Bestimmen einer dritten Transformation des Labelstapels als das Inverse einer Transformation des Labelstapels eines Pakets, das auf dem genannten Teil des primären LSP (20) von Ausgang des ersten Knotens (11) zu dem zusätzlichen intermediären Knoten (13) übertragen wird, und
- Mitteln zum Konfigurieren dieses zusätzlichen intermediären Knotens (13) zur Verarbeitung des Labelstapels eines etwaigen Pakets, das er in den Rückkopplungs-LSP (21) vermittelt, um die genannte inverse Transformation vor dem Einschieben eines Labels des Rückkopplungs-LSP (21) anzuwenden.

## Revendications

1. Procédé de fourniture de ressources de sauvegarde pour un chemin de commutation par étiquette (LSP) primaire (5, 20) dans un réseau de commutation par étiquette, le LSP primaire (5, 20) ayant au moins une portion pour transmettre des paquets de données contenant une pile d'étiquettes à partir d'un premier noeud de commutation par étiquette (1, 11) à un second noeud de commutation par étiquette (3, 15), ladite portion comprenant au moins un noeud de commutation par étiquette intermédiaire (2, 12 à 14) entre les premier et second noeuds (1, 3, 11, 15), le procédé comprenant les étapes de :
- définition d'au moins un LSP de sauvegarde (6, 22) commençant à partir du premier noeud (1, 11) et fusionné avec le LSP primaire (5, 20) sur le second noeud (3, 15) ;
- configuration du premier noeud (1, 11) pour commuter un paquet vers le LSP de sauvegarde (6, 22) lors de la détection d'une défaillance dans ladite portion du LSP primaire (5, 20) ;
**caractérisé en ce que** le procédé comprend en outre les étapes de :
- détermination d'une transformation appliquée de la pile d'étiquettes d'un paquet transmis le long de ladite portion du LSP primaire (5, 20) à partir d'une sortie du premier noeud (1, 11) à une entrée du second noeud (3, 15) ; et
- configuration d'au moins un noeud du LSP de sauvegarde (6, 22) pour traiter la pile d'étiquettes de tout paquet transmis le long du LSP de sauvegarde (6, 22) afin d'appliquer ladite transformation.

2. Procédé selon la revendication 1, dans lequel le noeud du LSP de sauvegarde (6) configuré pour appliquer la transformation est le premier noeud (1), ladite transformation étant appliquée avant de pousser une étiquette du LSP de sauvegarde (6).

3. Procédé selon la revendication 1, dans lequel le noeud du LSP de sauvegarde (6) configuré pour appliquer la transformation est le second noeud (3).

4. Procédé selon la revendication 1, dans lequel l'étape de détermination de la transformation de la pile d'étiquettes comprend la transmission de messages d'un protocole de signalisation entre les noeuds (2) de ladite portion du LSP primaire (5), comprenant des indications de manipulation de pile d'étiquettes réalisées par lesdits noeuds sur des paquets transmis le long du LSP primaire (5), lesdites indications étant traitées sur un des premier et second noeuds (1, 3) pour dériver ladite transformation.

5. Procédé selon la revendication 1, dans lequel l'étape de détermination de la transformation de la pile d'étiquettes comprend la transmission d'au moins un paquet échantillon à partir du premier noeud (1) au second noeud (3) le long de ladite portion du LSP primaire (5).

6. Procédé selon la revendication 1, dans lequel le premier noeud (1) est configuré pour commuter un paquet destiné au LSP primaire (5) vers le LSP de sauvegarde (6) lors de la détection d'une défaillance dans ladite portion du LSP primaire (5) jusqu'au noeud intermédiaire situé à côté du premier noeud (1).

7. Procédé selon la revendication 1, comprenant en outre les étapes de :
- définition d'au moins un LSP de rétrocommutation (21) à partir d'un noeud intermédiaire (14) du LSP primaire (20) jusqu'au premier noeud (11) ; et
- configuration dudit noeud intermédiaire (14) pour commuter un paquet au LSP de rétrocommutation (21) lors de la détection d'une défaillance dans ladite portion du LSP primaire (20) en aval dudit noeud intermédiaire (14) et jusqu'au noeud situé à côté dudit noeud intermédiaire (14).

8. Procédé selon la revendication 7, comprenant en outre l'étape de configuration du premier noeud (11) pour commuter vers le LSP de sauvegarde (22) tout paquet reçu sur le LSP de rétrocommutation (21).

9. Procédé selon la revendication 8, comprenant en outre les étapes de :
- détermination d'une seconde transformation de la pile d'étiquettes comme l'inverse d'une transformation de la pile d'étiquettes d'un paquet transmis le long de ladite portion du LSP primaire (20) à partir de la sortie du premier noeud (11) jusqu'audit noeud intermédiaire (14) ; et
- configuration d'au moins un noeud du LSP de rétrocommutation (21) pour traiter la pile d'étiquettes d'un paquet quelconque transmis par ledit noeud intermédiaire (14) le long du LSP de rétrocommutation (21) afin d'appliquer ladite seconde transformation.

10. Procédé selon la revendication 9, dans lequel le noeud de LSP de rétrocommutation (21) configuré pour appliquer la seconde transformation est ledit noeud intermédiaire (14), la seconde transformation étant appliquée avant de pousser une étiquette du LSP de rétrocommutation (21).

11. Procédé selon la revendication 10, dans lequel le LSP primaire (20) a au moins un noeud intermédiaire supplémentaire (13) entre le premier noeud (11) et ledit noeud intermédiaire (14), dans lequel le LSP de rétrocommutation (21) est défini pour comprendre les noeuds du LSP primaire (20), dans une direction inverse, à partir dudit noeud intermédiaire (14) jusqu'au premier noeud (11).

12. Procédé selon la revendication 11, comprenant en outre l'étape de configuration dudit noeud intermédiaire supplémentaire (13) pour commuter un paquet au LSP de rétrocommutation (21) lors de la détection d'une défaillance dans ladite portion du LSP primaire (20) en aval dudit noeud intermédiaire supplémentaire (13) et jusqu'au noeud situé à côté dudit noeud intermédiaire supplémentaire 13.

13. Procédé selon la revendication 12, comprenant en outre les étapes de :
- détermination d'une troisième transformation de la pile d'étiquettes comme l'inverse d'une transformation de la pile d'étiquettes d'un paquet transmis le long de ladite portion du LSP primaire (20) à partir de la sortie du premier noeud (11) jusqu'audit noeud intermédiaire supplémentaire (13) ; et
- configuration dudit noeud intermédiaire supplémentaire (13) pour traiter la pile d'étiquettes de tout paquet qu'il commute vers le LSP de rétrocommutation (21) afin d'appliquer ladite transformation inverse avant de pousser une étiquette du LSP de rétrocommutation (21).

14. Réseau de commutation par étiquettes comprenant un chemin de commutation par étiquette (5, 20) (LSP) primaire ayant au moins une portion pour transmettre des paquets de données contenant une pile d'étiquettes à partir d'un premier noeud de commutation par étiquettes (1, 11) à un second noeud de commutation par étiquette (3, 15), ladite partie comprenant au moins un noeud de commutation par étiquette intermédiaire entre les premier et second noeuds (1, 3, 11, 15), le réseau comprenant :
- un moyen pour définir au moins un LSP de sauvegarde (6, 22) commençant à partir du premier noeud et fusionné avec le LSP primaire (5, 20) sur le second noeud (3, 15) ;
- un moyen pour configurer le premier noeud (1, 11) pour obliger ledit premier noeud (1, 11) à commuter un paquet au LSP de sauvegarde (6, 22) lors de la détection d'une défaillance de ladite portion du LSP primaire (5, 20) ;
**caractérisé en ce que** le réseau comprend en outre :
- un moyen pour déterminer une transformation appliquée de la pile d'étiquettes d'un paquet transmis le long de ladite portion du LSP primaire (5, 20) à partir d'une sortie du premier noeud (1, 11) à une entrée du second noeud (3, 15) ; et
- un moyen pour configurer un noeud du LSP de sauvegarde (6, 22) pour obliger ledit noeud (1, 3, 11, 15) à traiter la pile d'étiquettes de tout paquet transmis le long du LSP de sauvegarde (6, 22) afin d'appliquer ladite transformation.

15. Réseau de commutation par étiquette selon la revendication 14, dans lequel le noeud du LSP de sauvegarde (6) configuré pour la transformation est le premier noeud (1), ladite transformation étant appliquée avant de pousser une étiquette du LSP de sauvegarde (6) .

16. Réseau de commutation par étiquettes selon la revendication 14, dans lequel le noeud du LSP de sauvegarde (6) configuré pour la transformation est le second noeud (3).

17. Réseau de commutation par étiquettes selon la revendication 14, dans lequel le moyen pour déterminer la transformation de la pile d'étiquettes comprend un moyen pour transmettre des messages d'un protocole de signalisation entre les noeuds (2) de ladite portion du LSP primaire (5), comprenant des indications de manipulation de la pile d'étiquettes réalisées par lesdits noeuds (2) sur des paquets transmis le long du LSP primaire (5), et un moyen de traitement pour traiter lesdites indications sur un des premier et second noeuds (1, 3) pour dériver ladite transformation.

18. Réseau de commutation par étiquettes selon la revendication 14, dans lequel le moyen pour déterminer la transformation de la pile d'étiquettes comprend un moyen pour transmettre au moins un paquet échantillon du premier noeud (1) au second noeud (3) le long de ladite portion du LSP primaire (5).

19. Réseau de commutation par étiquettes selon la revendication 14, dans lequel le premier noeud (1) est configuré pour commuter un paquet destiné au LSP primaire (5) vers le LSP de sauvegarde (6) lors de la détection d'une défaillance dans ladite portion du LSP primaire (5) jusqu'au noeud intermédiaire situé à côté du premier noeud (1).

20. Réseau de commutation par étiquettes selon la revendication 14, comprenant en outre :
- un moyen pour définir au moins un LSP de rétrocommutation (21) à partir d'un noeud intermédiaire (14) du LSP primaire (20) jusqu'au premier noeud (11) ; et
- un moyen pour configurer ledit noeud intermédiaire (14) pour obliger ledit noeud intermédiaire (14) à commuter un paquet au LSP de rétrocommutation (21) lors de la détection d'une défaillance dans ladite portion du LSP primaire (20) en aval dudit noeud intermédiaire (14) et jusqu'au noeud situé à côté dudit noeud intermédiaire (14).

21. Réseau de commutation par étiquettes selon la revendication 20, comprenant en outre un moyen pour configurer le premier noeud (11) pour obliger ledit premier noeud à commuter au LSP de sauvegarde (22) tout paquet reçu sur le LSP de rétrocommutation (21).

22. Réseau de commutation par étiquettes selon la revendication 20, comprenant en outre :
- un moyen pour déterminer une seconde transformation de la pile d'étiquettes comme l'inverse d'une transformation de la pile d'étiquettes d'un paquet transmis le long de ladite portion du LSP primaire (20) à partir de la sortie du premier noeud (11) jusqu'audit noeud intermédiaire (14) ; et
- un moyen pour configurer un noeud du LSP de rétrocommutation (21) pour obliger ledit noeud à traiter la pile d'étiquettes d'un paquet quelconque transmis à partir dudit noeud intermédiaire (14) le long du LSP de rétrocommutation (21) afin d'appliquer ladite seconde transformation.

23. Réseau de commutation par étiquettes selon la revendication 22, dans lequel le noeud du LSP de rétrocommutation (21) configuré pour appliquer la seconde transformation est ledit noeud intermédiaire (14), la seconde transformation étant appliquée avant de pousser une étiquette du LSP de rétrocommutation (21).

24. Réseau de commutation par étiquettes selon la revendication 23, dans lequel le LSP primaire a au moins un noeud intermédiaire supplémentaire (13) entre le premier noeud (11) et ledit noeud intermédiaire (14), dans lequel le LSP de rétrocommutation (21) est défini pour comprendre les noeuds du LSP primaire (20), dans une direction inverse, dudit noeud intermédiaire (14) jusqu'au premier noeud (11).

25. Réseau de commutation par étiquettes selon la revendication 24, comprenant en outre un moyen pour configurer ledit noeud intermédiaire supplémentaire (13) pour obliger ledit noeud intermédiaire supplémentaire (13) à commuter un paquet au LSP de rétrocommutation (21) lors de la détection d'une défaillance dans ladite portion du LSP primaire (20) en aval dudit noeud intermédiaire supplémentaire (13) jusqu'au noeud situé à côté dudit noeud intermédiaire supplémentaire (13).

26. Réseau de commutation par étiquettes selon la revendication 25, comprenant en outre :
- un moyen pour déterminer une troisième transformation de la pile d'étiquettes comme l'inverse d'une transformation de la pile d'étiquettes d'un paquet transmis le long de ladite portion du LSP primaire (20) à partir de la sortie du premier noeud (11) jusqu'audit noeud intermédiaire supplémentaire (13) ; et
- un moyen pour configurer ledit noeud intermédiaire supplémentaire (13) pour obliger ledit noeud intermédiaire supplémentaire (13) à traiter la pile d'étiquettes de tout paquet qu'il commute au LSP de rétrocommutation (21) afin d'appliquer ladite transformation inverse avant de pousser une étiquette du LSP de rétrocommutation (21).
